(19) Europäisches Patentamt
European Patent Office
Office européen des brevets

(11) Veröffentlichungsnummer : **0 136 981**
**B1**

(12) # EUROPÄISCHE PATENTSCHRIFT

(45) Veröffentlichungstag der Patentschrift : **05.04.89**

(21) Anmeldenummer : **84810478.2**

(22) Anmeldetag : **01.10.84**

(51) Int. Cl.[4] : **C 07 C 97/24**, C 07 C119/14, C 09 B 1/48, D 06 P 1/24

(54) **Verfahren zur Herstellung von Antrachinonimidverbindungen.**

(30) Priorität : **06.10.83 CH 5432/83**

(43) Veröffentlichungstag der Anmeldung : **10.04.85 Patentblatt 85/15**

(45) Bekanntmachung des Hinweises auf die Patenterteilung : **05.04.89 Patentblatt 89/14**

(84) Benannte Vertragsstaaten : **CH DE FR GB LI**

(56) Entgegenhaltungen : **EP-A- 0 047 205**

(73) Patentinhaber : **CIBA-GEIGY AG**
**Klybeckstrasse 141**
**CH-4002 Basel (CH)**

(72) Erfinder : **Dill, Bernd, Dr.**
**Brunnenweg 19**
**D-7888 Rheinfelden (DE)**

**EP 0 136 981 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Viele Anthrachinonimidverbindungen werden durch Kondensation einer verküpbaren Anthrachinonverbindung, welche mindestens eine primäre Aminogruppe aufweist, mit einer aromatischen Halogenverbindung hergestellt. Die Kondensation erfolgt zweckmässig bei erhöhter Temperatur im organischen Lösungsmittel in Gegenwart eines basischen Mittels und einer Kupferverbindung. Dieses bekannte Verfahren hat jedoch den Nachteil, dass die Kondensationsreaktion nicht quantitativ erfolgt und daher z. B. durch Ausgangsmaterialien stark verunreinigte Kondensationsprodukte erhalten werden.

In der EP-A-004 205 wird gemäss Beispielen 1 und 16 die Kondensation einer Aminoanthrachinonverbindung mit halogeniertem Anthrachinon zuerst bei 140-160 °C durchgeführt und dann bei 160-170 °C fortgesetzt, wobei die Produkte erst durch mehrmalige Reinigungsprozesse erhalten werden.

Der vorliegenden Erfindung lag die Aufgabe zugrunde ein Verfahren zu entwickeln, das die genannten Nachteile nicht aufweist bzw. reduziert.

Gemäss vorliegender Erfindung wird diese Aufgabe dadurch gelöst, indem man das Kondensationsprodukt ohne Zwischenisolierung einer Nachbehandlung bei höherer Temperatur von 215-250 °C unterwirft. Ueberraschenderweise werden dabei wesentlich reinere und farbstärkere Produkte in besseren Ausbeuten erhalten, selbst wenn die Edukte in stöchiometrischen Mengen eingesetzt werden.

Gegenstand der Erfindung ist somit ein Verfahren zur Herstellung von Anthrachinonimidverbindungen durch Kondensation von verküpbaren Anthrachinonverbindungen, welche mindestens eine primäre Aminogruppe aufweisen, mit aromatischen Halogenverbindungen im organischen Lösungsmittel bei erhöhter Temperatur in Anwesenheit eines basischen Mittels und eines Kupferkatalysators, dadurch gekennzeichnet, dass man zunächst die Kondensation bis zu einem Umsatz von 60-95 % durchführt und dann die Reaktionsmischung ohne Zwischenisolierung bei einer Temperatur von 215-250 °C, die 5-60 °C über der anfänglichen Kondensationstemperatur liegt, nachbehandelt.

Die verküpbaren Anthrachinonverbindungen mit mindestens einer primären Aminogruppe können die in Küpenfarbstoffen üblichen Substituenten, wie z. B. Halogen, Alkyl, Alkoxy oder Acylamino, wie Acetylamino und Benzoylamino, und auch annellierte Benzolringe enthalten. Vorzugsweise handelt es sich um Aminoanthrachinone wie 1-Aminoanthrachinon, 1,4- und 1,5-Diaminoanthrachinon, 1-Amino-4-benzoylaminoanthrachinon und 1-Amino-5-benzoylaminoanthrachinon.

Als aromatische Halogenverbindungen kommen solche in Frage, bei denen das Halogenatom direkt an den aromatischen Kern gebunden ist. Besonders geeignet unter diesen sind halogeniertes, gegebenenfalls noch durch weitere bei Küpfenfarbstoffen übliche Substituenten substituiertes Anthrachinon, Benzanthron, Anthanthron, Pyranthron, Dibenzanthron, Phthaloylacridon, Flavanthron, Dibenzpyrenchinon und Isoviolanthron, wie vor allem dihalogeniertes, insbesondere dibromiertes Benzanthron und dihalogeniertes, insbesondere dichloriertes Anthrachinon.

Die aromatische Halogenverbindung und die verküpbare Anthrachinonverbindung werden vorteilhaft in etwa stöchiometrischen Mengen eingesetzt ; ein Ueberschuss von z. B. 10 % an einer der Komponenten ist jedoch möglich.

Die Kondensationsreaktion erfolgt bei erhöhter Temperatur, vorzugsweise oberhalb 150 °C in einem inerten Lösungsmittel, wie z. B. Sulfolan oder insbesondere Nitrobenzol bei 180 bis 210 °C unter Normaldruck.

Als Kupferkatalysatoren kommen metallisches Kupfer sowie Kupferverbindungen, wie z. B. Kupferoxid oder Kupfer-I-chlorid in Frage.

Der Kupferkatalysator kann der Reaktionsmischung in mehreren Portionen, verteilt auf die Reaktionsdauer, zugesetzt werden, wobei die Katalysatormenge pro Portion gleich bleiben kann, oder z. B. von der ersten zur letzten Portion zunehmen oder abnehmen kann. Es ist auch möglich, den Kupferkatalysator kontinuierlich während der gesamten Reaktion oder während einzelnen Phasen der Reaktion zuzusetzten. Diese Verfahrensvariante soll ebenfalls als « Zugabe in mehreren Portionen » verstanden werden. Bei heftig miteinander reagierenden Komponenten empfiehlt es sich, bei den ersten Portionen geringere Mengen einzusetzen als bei den folgenden. Vorzugsweise setzt man den Katalysator in 5 bis 20 gleichen Portionen zu, wobei die erste Portion zu Beginn der Reaktion und die restlichen Portionen danach in etwa gleichen Zeitabständen zugegeben werden. Die Kupferkatalysator kann in fester Form oder auch als Suspension, z. B. als Suspension in Nitrobenzol zugesetzt werden.

Die Kondensationsreaktion wird in Gegenwart eines basischen Mittels durchgeführt. Geeignete basische Mittel sind beispielsweise Natriumhydrogencarbonat, Kaliumhydrogencarbonat, Natriumacetat, Kaliumacetat, Natriumcarbonat und Kaliumcarbonat sowie auch Mischungen dieser Verbindungen.

Erfindungsgemäss erfolgt, nachdem die Kondensationsreaktion bis zu einem Umsatz von 60-95 % fortgeschritten ist, eine Nachbehandlung der Reaktionsmischung. Diese Nachbehandlung, während etwa 2 bis 5 Stunden, erfolgt bei erhöhter Temperatur, gegebenenfalls unter Ueberdruck. Dabei liegt die erhöhte Temperatur grundsätzlich über der anfänglichen Kondensationstemperatur, vorzugsweise 5-60 °C, insbesondere 10-40 °C darüber. Bei der Durchführung der Kondensationsreaktion in Nitrobenzol bei einer Temperatur von etwa 180 bis 210 °C erfolgt die Nachbehandlung z. B. bei einer Temperatur von 215° bis 250 °C. Durch die erhöhte Temperatur stellt sich ein Ueberdruck etwa zwischen 0,5 bis 3,0 bar ein.

Nach der erfindungsgemässen Nachbehandlung werden die Kondensationsprodukte auf übliche Art und Weise isoliert, beispielsweise indem man das Lösungsmittel durch Wasserdampfdestillation entfernt, danach das Kondensationsprodukt abfiltriert und trocknet.

Mittels des erfindungsgemässen Verfahrens wird eine Steigerung der Ausbeute gegenüber den bekannten Verfahren ohne Nachbehandlung um etwa 5 bis 20 Gew.-%, bezogen auf die eingesetzte Aminoverbindung, erreicht ; darüberhinaus werden qualitätsverbesserte Produkte erhalten die z. B. durch eine grössere Reinheit und Farbstärke gekennzeichnet sind.

Die erhaltenen Anthrachinonimidverbindungen sind meist Farbstoff-Zwischenprodukte ; sie ergeben nach der Ueberführung in Carbazol- oder Acridin-Derivate Küpenfarbstoffe, die Verwendung finden zum Färben und Bedrucken von Textilmaterialien wie z. B. Baumwolle.

Setzt man im erfindungsgemässen Verfahren Mischungen der aromatischen Halogenverbindungen ein, so hat man hiermit eine Möglichkeit, die Nuance des Küpenfarbstoffes, welcher aus der Anthrachinonimidverbindung erhalten wird, zu steuern, bedingt durch den quantitativen Umsatz der aromatischen Halogenverbindung mit der verküpbaren Anthrachinonverbindung.

In den nachfolgenden Beispielen bedeuten Teile (T) Gewichtsteile und Prozente Gewichtsprozente. Die Temperaturen sind in Grad Celsius angegeben.

## Beispiel 1

In einen Reaktionskessel gibt man bei einer Innentemperatur unter 80° 5 000 T Nitrobenzol und fügt über eine Dosierschnecke 600 T 3,8-Dibrombenzanthron (trocken) zu. Anschliessend trägt man 705 T 1-Aminoanthrachinon und 250 T Natriumcarbonat, wasserfrei ein und gibt 7 T Kupfer-I-chlorid zu. Unter Rühren heizt man das Reaktionsgemisch langsam bei Normaldruck auf 190° und setzt bei dieser Temperatur noch weitere 7 T Kupfer-I-chlorid zu. Sodann wird auf 210° weitergeheizt und während 3 Stunden drucklos unter Rückfluss Wasser abdestilliert.

Hierauf erwärmt man auf eine Innentemperatur von 225°, wobei der Innendruck auf 0.6-0.8 bar ansteigt, und rührt das Reaktionsgemisch noch weitere 2 Stunden unter diesen Bedingungen. Dann lässt man abkühlen und trocknet das Reaktionsprodukt. Man erhält 1 040 T (100 % Ausbeute, bezogen auf eingesetztes 3,8-Dibrombenzanthron) des Anthrachinonimides der Formel

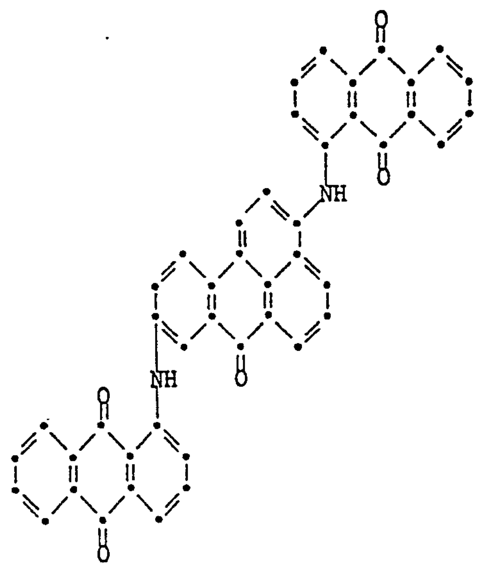

Das erhaltene Anthrachinonimid wird in einer Alkalischmelze auf übliche Weise einem Acridin-Ringschluss unterworfen. Das erhaltene Produkt kann dann zum Färben von z. B. Baumwolle verwendet werden, wobei man olivegrüne Ausfärbungen erhält.

Verfährt man analog den obigen Angaben, führt jedoch keine Nachbehandlung durch, so reagieren nur ca. 95 % des eingesetzten 1-Aminoanthrachinons. Im so erhaltenen Anthrachinonimid sind daher auch noch das Reaktionsprodukt von 1 Mol 1-Aminoanthrachinon mit 1 Mol 3,8-Dibrombenzanthron sowie freies 1-Aminoanthrachinon enthalten. Der in der anschliessenden Alkalischmelze hergestellte Küpenfarbstoff ist mindestens 10 % farbschwächer und wird aufgrund der Verunreinigungen mit wechselnder Nuance sowie schlechter Polyester-Reserve erhalten.

## Beispiel 2

In einem Reaktionskessel werden 5 000 T Nitrobenzol vorgelegt ; dazu gibt man 428,5 T 1,5-Dichloranthrachinon, 670 T 1-Aminoanthrachinon, 250 T Natriumcarbonat wasserfrei und 10 T Kupfer-I-chlorid. Unter Rühren heizt man auf 190° auf und gibt weitere 10 T Kupfer-I-chlorid zu. Nach 5-stündiger, druckloser Rückflussdestillation erwärmt man das Reaktionsgemisch auf 240°, wobei der Innendruck auf 2 bar ansteigt. Während 4 Stunden verrührt man unter diesen Bedingungen. Man lässt abkühlen, trennt das Reaktionsprodukt ab und trocknet es. Man erhält 976 T (97 % Ausbeute bezogen auf eingesetztes 1,5-Dichloranthrachinon) des Anthrachinonimides der Formel

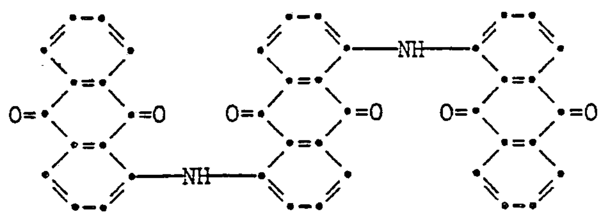

Das gebildete Anthrachinonimid wird mit einem doppelten Carbazol-Ringschluss in einen gelben Küpenfarbstoff überführt.

Verfährt man analog den obigen Angaben, führt jedoch keine Nachbehandlung durch, so reagieren nur ca. 80 % des eingesetzten 1-Aminoanthrachinons. Aehnlich wie im Beispiel 1 führt der unvollständige Umsatz auf der Anthrimidstufe zu einem Farbstoff mit geringerer Färbstärke und starker Verschlechterung der Reinheit und Nuance gegenüber dem gemäss obigem Beispiel erhaltenen Produkt.

Beispiel 3

In einem Reaktionskolben werden 220 T Nitrobenzol vorgelegt; dazu gibt man 176,4 T 1,5-Dichloranthrachinon, 236 T 1-Aminoanthrachinon, 42,0 T 1,5-Diaminoanthrachinon, 340 T 1-Chloroanthrachinon, 154 T Natriumcarbonat wasserfrei und 14 T Kupfer-I-chlorid. Unter Rühren heizt man auf 190° auf. Nach 2-stündiger, druckloser Rückflussdestillation erwärmt man das Reaktionsgemisch auf 240°, wobei der Innendruck auf 2 bar ansteigt. Während 3 Stunden verrührt man unter diesen Bedingungen. Man lässt abkühlen, trennt das Reaktionsprodukt ab und trocknet es. Man erhält 466 T eines Anthrachinonimidgemisches.

Das gebildete Anthrachinonimid wird mit einem doppelten Carbazol-Ringschluss in einen Küpenfarbstoff überführt, der Baumwolle in einer gelbbraunen Nuance färbt.

Beispiel 4

In 333 Teilen Nibrobenzol werden 66,1 Teile 1-Amino-4-benzoylamidoanthrachinon, 28,1 Teile 1,3-Dichlor-2-methylanthrachinon, 33 Teile Soda und 1,6 Teile Kupfer(I)chlorid angeschlämmt.

Innerhalb 1 1/2 Std. wird auf 200-205 °C aufgeheizt und 1 1/2 Std. bei dieser Temperatur gerührt (Normaldruck). Das entstehende Reaktionswasser wird über einen absteigenden Kühler entfernt.

Nachdem der Reaktionskolben verschlossen ist, wird weiter auf 230-235 °C aufgeheizt (Druck 3-4 bar). Unter diesen Bedingungen hält man die Reaktionsmasse weitere 5 Stunden.

Nach dem Abkühlen entfernt man das Nitrobenzol mit Hilfe einer Wasserdampfdestillation. Man filtriert und trocknet das entstandene Produkt und erhält 71,1 Teile eines grauen Pulvers. Der so erhaltene Farbstoff lässt sich zum Färben von Baumwolle verwenden, wobei man eine graue Ausfärbung erhält.

Beispiel 5

In einem Reaktionskessel werden 4 600 Teile Nitrobenzol vorgelegt. Bei einer Temperatur unter 30 °C werden 350 kg bromiertes Violanthron (Bromierungsgrad 28-30 %), 222 Teile 1-Aminoanthrachinon und 193 Teile Natriumcarbonat eingetragen. Unter Rühren wird auf 200-210 °C aufgeheizt und diese Temperatur 5 Stunden gehalten. Während dieser Zeit werden in 7 Portionen total 32,9 Teile Kupfer(I)chlorid in 588 Teilen Nitrobenzol zudosiert. Das entstehende Wasser destilliert man ab.

Hierauf erwämt man auf eine Innentemperatur von 230 °C und rührt die Reaktionssuspension noch weitere 3 Stunden unter diesen Bedingungen. Dann lässt man abkühlen und entfernt das Nitrobenzol mit Hilfe einer Wasserdampfdestillation. Nach dem Filtrieren und Trocknen erhält man 510 Teile eines Farbstoffgemisches. Das erhaltene Produkt kann zum Färben von Baumwolle verwendet werden, wobei man graue Ausfärbungen mit guten Echtheiten erhält.

Beispiel 6

Arbeitet man wie im Beispiel 5 beschrieben, setzt jedoch anstelle von bromiertem Violanthron eine äquivalente Menge 3-Brombenzanthron ein, so erhält man einen Farbstoff, der Baumwolle olive färbt.

Beispiel 7

Arbeitet man wie im Beispiel 1 beschrieben, setzt jedoch anstelle von Dibrombenzanthron und Aminoanthrachinon äquivalente Mengen 1-Chloranthrachinon und 1,4-Diaminoanthrachinon ein, so erhält man einen Farbstoff, der Baumwolle braun färbt.

Beispiel 8

In 550 Teilen Nitrobenzol werden 55 Teile 1-Benzamido-4-bromanthrachinon, 45 Teile 1-Amino-5-benzamidoanthrachinon, 10 Teile Soda und 1,4 Teile Kupfer-I-chlorid angeschlämmt. Unter Rühren wird auf 190° aufgeheizt und dann weitere 1,3 Teile Kupfer-I-chlorid zugegeben. Danach wird auf 205° aufgeheizt und 3 Stunden bei dieser Temperatur gerührt, wobei das entstehende Reaktionswasser abdestilliert wird.

Hierauf erwärmt man auf 215°, wobei sich ein Druck von ca. 1 bar einstellt, und rührt weitere 2 Stunden unter diesen Bedingungen.

Dann lässt man etwas abkühlen und entfernt das Nitrobenzol durch Destillation. Nach dem Trocknen erhält man ca. 85 Teile des Anthrimids, welches durch Carbazolierung und einen braunen Küpenfarbstoff überführt werden kann.

Beispiel 9

In 550 Teilen Nitrobenzol werden 66 Teile 1-Chloranthrachinon, 60,5 Teile 1-Aminoanthrachinon, 26,4 Teile Soda und 0,75 Teile Kupfer-I-chlorid angeschlämmt. Unter Rühren wird auf 190° aufgeheizt und dann weitere 0,75 Teile Kupfer-I-chlorid zugegeben. Danach wird auf 206° aufgeheizt und 3 Stunden bei dieser Temperatur gerührt, wobei das entstehende Reaktionswasser abdestilliert wird.

Hierauf erwärmt man auf 214°, wobei sich ein Druck von ca. 1 bar einstellt, und rührt weitere 2 Stunden unter diesen Bedingungen.

Dann lässt man etwas abkühlen und entfernt das Nitrobenzol durch Destillation. Nach dem Trocknen erhält man ca. 115 Teile des Anthrimids, welches zur Weiterverarbeitung zu Küpenfarbstoffen geeignet ist.

**Patentansprüche**

1. Verfahren zur Herstellung von Anthrachinonimidverbindungen durch Kondensation von verküpbaren Anthrachinon-Verbindungen, welche mindestens eine primäre Aminogruppe aufweisen, mit aromatischen Halogenverbindungen im organischen Lösungsmittel bei erhöhter Temperatur in Anwesenheit eines basischen Mittels und eines Kupferkatalysators, dadurch gekennzeichnet, dass man zunächst die Kondensation bis zu einem Umsatz von 60-95 % durchführt und dann die Reaktionsmischung ohne Zwischenisolierung bei einer Temperatur von 215° bis 250 °C, die 5-60 °C über der anfänglichen Kondensationstemperatur liegt, nachbehandelt.

2. Verfahren nach Anspruch 1, dadurch gekennzeichnet, dass man als verküpbare Anthrachinonverbindung mit primärer Aminogruppe ein Aminoanthrachinon einsetzt.

3. Verfahren gemäss einem der Ansprüche 1 und 2, dadurch gekennzeichnet, dass man als aromatische Halogenverbindung ein Halogenbenzanthron oder ein Halogenanthrachinon, vorzugsweise Dibrombenzanthron oder Dichloranthrachinon, einsetzt.

4. Verfahren gemäss den Ansprüchen 1 bis 3, dadurch gekennzeichnet, dass die Nachbehandlungstemperatur 10-40 °C über der anfänglichen Kondensationstemperatur liegt.

5. Verfahren gemäss den Ansprüchen 1 bis 4, dadurch gekennzeichnet, dass man die Nachbehandlung mit einem Ueberdruck bis zu 3 bar durchführt.

**Claims**

1. A process for the preparation of an anthraquinone imide compound by condensing a vattable anthraquinone compound which contains at least one primary amino group with an aromatic halogen compound, in an organic solvent and at elevated temperature in the presence of a base and a copper catalyst, which comprises first carrying out the condensation until a reaction of 60-95 % has taken place, and then subjecting the reaction mixture, without isolating the reaction product, to an aftertreatment at a temperature from 215° to 250 °C which is 5° to 60 °C above the initial temperature of the condensation.

2. A process according to claim 1, wherein an aminoanthraquinone is used as vattable anthraquinone compound containing a primary amino group.

3. A process according to either of claims 1 and 2 wherein a halobenzanthrone or haloanthraquinone, preferably dibromobenzanthrone or dichloroanthraquinone, is used as aromatic halogen compound.

4. A process according to any one of claims 1 to 3, wherein the aftertreatment temperature is 10° to 40 °C above the initial temperature of the condensation.

5. A process according to any one of claims 1 to 4, wherein the aftertreatment is carried out under an overpressure of up to 3 bar.

**Revendications**

1. Procédé de préparation d'anthraquinonimides par condensation de dérivés anthraquinoniques réductibles, portant au moins un groupe amino primaire, avec des composés aromatiques halogénés, dans un solvant organique, à température élevée, en présence d'un agent basique et d'un catalyseur au cuivre, caractérisé en ce que l'on réalise d'abord la condensation jusqu'à un taux de conversion de 60 à 95 %, puis, sans isolement intermédiaire, on soumet le mélange de réaction à un traitement complémentaire à une température de 215 à 250 °C, supérieure de 5 à 60 °C à la température de condensation initiale.

2. Procédé selon la revendication 1, caractérisé en ce que l'on utilise une aminoanthraquinone en tant que dérivé anthraquinonique encuvable à groupe amino primaire.

3. Procédé selon l'une des revendications 1 et 2, caractérisé en ce que l'on utilise, en tant que composé aromatique halogéné, une halogénobenzanthrone ou une halogénoanthraquinone, de préférence la dibromobenzanthrone ou la dichloroanthraquinone.

4. Procédé selon les revendications 1 à 3, caractérisé en ce que la température du traitement complémentaire est supérieure de 10 à 40 °C à la température de condensation initiale.

5. Procédé selon les revendications 1 à 4, caractérisé en ce que le traitement complémentaire est exécuté sous une surpression allant jusqu'à 3 bars.